(19) Europäisches Patentamt
European Patent Office
Office européen des brevets

(11) **EP 2 740 596 B1**

(12) **EUROPÄISCHE PATENTSCHRIFT**

(45) Veröffentlichungstag und Bekanntmachung des Hinweises auf die Patenterteilung:
**21.03.2018  Patentblatt 2018/12**

(51) Int Cl.:
**B32B 27/00** (2006.01)     **E04F 15/02** (2006.01)

(21) Anmeldenummer: **13005681.5**

(22) Anmeldetag: **06.12.2013**

(54) **DECKSCHICHT**

COVERING LAYER

COUCHE DE RECOUVREMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.12.2012  DE 102012023903**
**26.04.2013  DE 102013007236**

(43) Veröffentlichungstag der Anmeldung:
**11.06.2014  Patentblatt 2014/24**

(73) Patentinhaber:
• **Parador GmbH**
**48653 Coesfeld (DE)**
• **Mondi Gronau GmbH**
**48599 Gronau (DE)**

(72) Erfinder:
• **Schwitte, Richard**
**DE-48417 Gescher (DE)**
• **Steggemann, Werner**
**DE - 48702 Stadtlohn (DE)**
• **Ohneiser, Alexander**
**DE - 48341 Altenberge (DE)**
• **Zimmermann, Jan**
**DE - 39112 Magdeburg (DE)**

(74) Vertreter: **Von Rohr Patentanwälte Partnerschaft mbB**
**Rüttenscheider Straße 62**
**45130 Essen (DE)**

(56) Entgegenhaltungen:
**EP-A1- 2 263 867     EP-A1- 2 650 119**

EP 2 740 596 B1

## Beschreibung

Die Erfindung betrifft eine Deckschicht für eine einen Plattengrundkörper aufweisende Platte, wie Bodenbelags-, Wand- oder Deckenverkleidungsplatte und/oder Möbelbauteil-, Gebäude-, Abdeck- oder Trockenausbauplatte und/oder als Fassaden-, Paneel- oder Dielenelement, Sichtblende o. dgl., wobei die Deckschicht eine Papierschicht und eine die Außenseite der Deckschicht bildende Folienschicht aus einem elastischen Kunststoff aufweist. Des Weiteren betrifft die vorliegende Erfindung eine mehrlagige elastische Folienschicht, die als Vorprodukt zur Herstellung einer Deckschicht der vorgenannten Art verwendet wird, sowie eine Platte mit einer Deckschicht der vorgenannten Art.

Eine Deckschicht und Platte der vorgenannten Art in Form eines Laminatbodenpaneels sind bereits aus der EP 2 263 867 B1 bekannt. Die bekannte Platte zeichnet sich bei Verwendung als Laminatbodenpaneel dadurch aus, dass sich durch die elastische Außenseite der Deckschicht nicht nur ein für den Benutzer angenehmes und im Vergleich zu bekannten Laminatböden anderes Laufgefühl ergibt, es ergibt sich im Übrigen in Abhängigkeit der Ausbildung der außenseitigen Folienschicht eine zum Teil deutliche Trittschallreduzierung mit der Folge, dass sogar unterseitige Trittschalldämmmatten entfallen oder aber zumindest von ihrer Dicke her erheblich reduziert werden können. Durch die Elastizität der Oberfläche der Deckschicht verbessern sich auch die Eigenschaften bezüglich Druck- und Stoßbeanspruchung der Produkte. Des Weiteren führt die Elastizität der Oberfläche und die Verwendung der elastischen Folienschicht zu einer für den Benutzer spürbaren, angenehmen Fußwärme.

Im Vergleich zu "harten" Laminatböden bietet ein nach der EP 2 263 867 B1 hergestellter Laminatboden eine Reihe von wesentlichen Vorteilen. Bei "harten" Laminatböden entstehen bei einer entsprechenden Belastung im Overlay Risse, so dass Feuchtigkeit und/oder Absplitterungen das Laminat in der Nutzung einschränken. Aufgrund der Elastizität der äußeren Folienschicht aus elastischem Kunststoff ergeben sich diese Probleme nicht. Darüber hinaus ist bei einer "weichen" Deckschicht ein scharfer Kantenschnitt möglich, so dass sich der beim Schneiden von "harten" Laminatplatten ergebende Weißbruch nicht auftritt. Darüber hinaus ist es so, dass bei Einsatz einer elastischen oberen Kunststoffschicht Abplatzungen an den Rändern vermieden werden. Daher gibt es beim Schneiden einzelner Paneelen keine Beeinträchtigungen, so dass der optisch-ästhetische Eindruck durchgängig gut ist.

Des Weiteren ist es so, dass sich gegenüber "harten" Laminatböden durch die oberseitige Folienschicht aus elastischem Kunststoff verbesserte Schnitteigenschaften des Paneels insgesamt ergeben, was im Ergebnis zu einer Erhöhung der Werkzeugstandzeit des Schneidwerkzeugs führt.

Insgesamt bietet ein Laminatbodenpaneel mit einer eine elastische Folienschicht aufweisenden Deckschicht eine Vielzahl von Vorteilen gegenüber sogenannten "harten" Laminatbodenpaneelen.

Bei dem aus der EP 2 263 867 B1 bekannten Laminatbodenpaneel weist die Deckschicht neben der Folienschicht eine Dekorpapierschicht auf. Diese kann beharzt sein. Der Gesamtverbund wird durch eine Heißverpressung mittels einer KT-Presse hergestellt. Hierzu wird ein Dekorpapier verwendet, das nach dem Druck mit Kunstharz getränkt wird und durchbeharzt ist. Die für die Imprägnierung des Dekorrohpapiers üblicherweise eingesetzten Tränkharzlösungen sind in der Regel Harze auf der Basis von Harnstoff-, Melamin- oder Phenolharzen. Alternativ wird in der EP 2 263 867 B1 vorgeschlagen, ein unbeharztes Dekorpapier für die Deckschicht zu verwenden, wenn ein entsprechender Kunststoff der Folienschicht verwendet wird, der nicht nur für die Verbindung zwischen dem Dekorpapier und der Folienschicht sorgt, sondern auch für eine feste Verbindung zur Trägerplatte.

Bei Versuchen, die im Zusammenhang mit der Nutzung einer entsprechend der EP 2 263 867 B1 hergestellten Platte durchgeführt worden sind, ist festgestellt worden, dass die bekannte Platte durchschnittliche Eigenschaften bei der Benutzung/Belastung zeigt.

Aus der älteren, nachveröffentlichten EP 2 650 119 A1 geht eine Deckschicht mit körperschalldämmenden Eigenschaften, insbesondere für Flächen aus Holzwerkstoffen hervor. Die Deckschicht ist versehen mit einer Außenschicht aus einem physikalisch oder chemisch vernetzten Polymer und mindestens einer ebenfalls aus einem physikalisch oder chemisch vernetzten Polymer bestehenden Funktionsschicht, die an der Unterseite der Außenschicht angeordnet ist und eine geringere Shore-Härte aufweist als die Außenschicht.

Aufgabe der vorliegenden Erfindung ist es nun, die Eigenschaften der bekannten Platte zu verbessern.

Die vorgenannte Aufgabe ist erfindungsgemäß im Wesentlichen dadurch gelöst, dass die Papierschicht als bereits bei der Papierherstellung teilweise imprägniertes Vorimprägnat oder als nach der Papierherstellung und vor der Verbindung mit der Folienschicht teilweise imprägniertes Papier ausgebildet ist. Bei einem Vorimprägnat handelt es sich um ein in der Regel als Dekorpapier ausgebildetes Papier, das in der Papiermaschine online oder offline nur teilweise imprägniert wird. Bei dem alternativ verwendeten Papier, das nach der Papierherstellung und vor der Verbindung mit der Folienschicht teilweise imprägniert wird, handelt es sich um ein solches, das, anders als Dekorpapiere mit durchimprägniertem Papierkern, die zur KT-Verpressung vorgesehen sind, nur teilweise mit einem Bindemittel imprägniert bzw. beharzt ist.

Im Ergebnis betrifft die Erfindung damit eine Deckschicht mit verbesserten Eigenschaften, welche eine bedruckte Papierschicht (Dekorpapier) und eine die Außenseite der Deckschicht bildende mehrlagige, elastische Folienschicht aufweist.

Erfindungsgemäße Deckschichten werden als Dekor- und Schutzschichten für Flächen aus Holzwerkstoffen, insbesondere als Overlay zur Herstellung von neuartigen Laminatbodenpaneelen genutzt. Hierbei werden erfindungsgemäße Deckschichten nach üblichen Verfahren auf geeignete Trägersysteme (z.B. HDF-, MDF-Platten, etc.) appliziert. Durch die spezifische Ausgestaltung der Deckschicht weisen derartige Paneele eine Reihe von Vorteilen gegenüber klassischen Laminatbodenpaneelen auf.

Erfindungsgemäße Deckschichten zeigen gute akustische Eigenschaften, insbesondere eine wirksame Körperschalldämmung. Weiterhin weisen derartige Deckschichten verbesserte Oberflächeneigenschaften auf, vor allem ist die Abriebbeständigkeit deutlich erhöht. Es soll insbesondere möglich sein, die Oberfläche der Deckschicht mit einer dauerhaften Struktur zu versehen, die der Struktur von Holzwerkstoffen nachempfunden ist. Überdies weisen erfindungsgemäße Deckschichten verbesserte Eigenschaften hinsichtlich Schäl-, Spalt- und Abhebefestigkeit auf, was durch die gesteigerte Verbundhaftung der gesamten Struktur erzielt wird. Hierbei sind insbesondere die Spaltfestigkeit des Dekorpapiers sowie die Anbindung der einzelnen Schichten aneinander optimiert.

Ein typischer Aufbau einer erfindungsgemäßen Deckschicht weist nacheinander folgende Schichten auf:

- Nutzschicht
- Funktionsschicht
- Haftvermittler (Grenzschicht zum Papier)
- Druckfarbe/Imprägnierungsmittel (Grenzschicht zur Folienschicht)
- Papier

Von den vorgenannten Schichten stellen die Nutzschicht, die Funktionsschicht und der Haftvermittler die mehrlagige, elastische Folienschicht dar, während die Durckfarbe / das Imprägnierungsmittel und das Papier das teilimprägnierte Papier, insbesondere Dekorpapier, darstellen.

Die die Außenseite der Deckschicht bildende elastische Folienschicht kann Additive, beispielsweise zur Verbesserung der Flammhemmung, der Verbesserung des elektrostatischen Verhaltens und dergleichen enthalten und/oder eingefärbt sein. Gemäß einer bevorzugten Ausführung der Erfindung ist die Folienschicht transparent, insbesondere hochtransparent, ausgebildet, sodass das darunter liegende Dekor sichtbar ist. Hierbei müssen die zur Erzeugung der Folienschicht eingesetzten Polymere lichtecht bzw. UV-beständig oder durch entsprechende Additive stabilisiert sein.

Die Folienschicht kann eine durch Prägen erzeugte dreidimensionale Oberflächenstruktur aufweisen, wobei feine Strukturen, wie sie beispielsweise für Furniere typisch sind, in die Außenschicht dauerhaft eingebracht werden können.

Die Deckschicht weist erfindungsgemäß eine Außenschicht (Nutzschicht) aus einem physikalisch oder einem chemisch vernetzten Polymer und mindestens eine ebenfalls aus einem physikalisch oder chemisch vernetzten Polymer bestehende Funktionsschicht auf. Die Funktionsschicht ist an der Unterseite der Außenschicht angeordnet und hat eine geringere Shorehärte als die Außenschicht. Sowohl die Außenschicht als auch die Funktionsschicht haben elastomere Eigenschaften und bestehen vorzugsweise aus thermoplastischen Polymeren, die physikalisch vernetzt sind oder nach ihrer Extrusion, das heißt nachträglich, chemisch vernetzt werden. Eine chemische Vernetzung kann beispielsweise durch nachträgliche Bestrahlung der extrudierten Deckschicht bewirkt werden. Die Außenschicht und die Funktionsschicht der Deckschicht sind vorzugsweise coextrudiert. Die Funktionsschicht absorbiert innerhalb des Verbundes mechanische Stöße und hat einen wirksamen trittschalldämmenden Effekt. Die Außenschicht verleiht der Oberfläche eine hohe Kratzfestigkeit, geringe Abriebswerte sowie eine angenehme Haptik. Die Außenschicht (Nutzschicht) kann insbesondere eine Shorehärte von größer 90 A bis Shore 80 D aufweisen, wobei eine Härte von etwa Shore 60 D bevorzugt ist. Die Shorehärte der Funktionsschicht liegt insbesondere im Bereich Shore 50 A bis maximal Shore 90 A, wobei für die Funktionsschicht eine Shorehärte von etwa Shore 70 A bevorzugt ist. Die Außenschicht und die Funktionsschicht können aus thermoplastischen Elastomeren auf Olefinbasis (TPE-O), vernetzten thermoplastischen Elastomeren auf Olefinbasis (TPE-V), thermoplastischen Elastomeren auf Urethanbasis (TPE-U), thermoplastischen Polyesterelastomeren (TPE-E), Styrol-Block-Copolymere (TPE-S) oder thermoplastischen Copolyamiden (TPE-A) bestehen. Bevorzugt bestehen die Außenschicht und die Funktionsschicht aus thermoplastischen Elastomeren auf Urethanbasis (TPE-U).

Die Dicke der Folienschicht ist abhängig von dem Verwendungszweck und kann in einem weiten Parameterbereich variiert werden. Als Overlay zur Herstellung von neuartigen Laminatbodenpaneelen, weist die elastische Folienschicht zweckmäßig eine Gesamtdicke zwischen 50 $\mu$m und 2000 $\mu$m auf, wobei die Dicke der Funktionsschicht um den Faktor 2 bis 100 größer sein sollte als die Dicke der Außenschicht. Die Dicke der Außenschicht kann zwischen 5 $\mu$m und 200 $\mu$m variiert werden. Die Funktionsschicht kann eine Schichtdicke zwischen 60 $\mu$m und 1800 $\mu$m aufweisen. Gemäß einer bevorzugten Ausführung der Erfindung, insbesondere zur Verwendung als Overlay auf Laminatpaneelen, weist die Außenschicht eine Schichtdicke zwischen 10 $\mu$m und 50 $\mu$m und die Funktionsschicht eine Schichtdicke zwischen 100 $\mu$m und 600 $\mu$m auf. Eine weitere Ausführung der erfindungsgemäßen Deckschicht ist gekennzeichnet durch eine Schichtenanordnung aus einer Mehrzahl von coextrudierten Schichten, die jeweils aus einem physikalisch oder nachträglich chemisch vernetzten thermoplastischen Polymer bestehen, wobei harte Schichten mit einer der Außenschicht entsprechenden oder zumindest vergleichbaren Shorehärte und weiche Schichten mit einer der Funktionsschicht entsprechenden oder zumindest vergleichbaren Shorehärten alternierend angeordnet sind. Die Abfolge harter Schichten und weicher Schichten bewirkt eine bessere Verteilung von Druckbelastungen und hat eine verbesserte Körperschalldämmung bzw. Trittschalldämmung zur Folge.

Die Deckschicht umfasst vorzugsweise eine Haftvermittlerschicht, die zwischen der Funktionsschicht und dem Trägerpapier angeordnet ist. Die Haftvermittlerschicht gewährleistet die Anbindung der Folien- an die Papierschicht und ist somit entscheidend für die gesamte Verbundhaftung der Deckschicht. Sie beeinflusst maßgeblich die Schäl-, Haft- und Spaltfestigkeit der Deckschicht und ist weiterhin für die resultierende Optik der Deckschicht von Relevanz. Sie muss so ausgestaltet sein, dass eine stoff- und formschlüssige Verbindung zwischen dem teilimprägnierten Papier, insbesondere Dekorpapier, und der Folienschicht erzielt wird. Hierzu muss die Haftvermittlerschicht chemisch sowohl auf das Material der Funktionsschicht als auch auf das Material der Papierschicht (im Wesentlichen auf das Bindemittel in Harz bzw. Druckfarbe) abgestimmt sein. Je nach spezifischer Ausgestaltung der Papierschicht werden unterschiedliche Haftvermittler auf der Basis eines Copolymers auf Polyamid-, Acrylat- oder Urethanbasis oder Mischungen daraus eingesetzt. Durch Anwendung von Druck und/oder Temperatur geht die Haftvermittlerschicht mit der vorbehandelten Papierschicht einen formschlüssigen Verbund ein, wodurch Lufteinschlüsse oder Kavernen zwischen Papier- und Folienschicht unterbunden, d. h. zumindest im wesentlichen vermieden werden, welche sich negativ auf das optische Erscheinungsbild der Deckschicht auswirken. Bevorzugtes Verfahren zur Verbindung von Papier- und Folienschicht ist die Coextrusionsbeschichtung. Sofern die Funktionsschicht die o.g. Eigenschaften selbst aufweist, kann unter Umständen auf eine spezielle Haftvermittlerschicht verzichtet werden.

Wenngleich bei der vorliegenden Erfindung grundsätzlich jegliches Papier verwendet werden kann, wird bevorzugt ein Dekorpapier verwendet. Bei einem Dekorpapier handelt es sich um ein Spezialpapier zur Oberflächenveredelung von Holzwerkstoffen. Im Bereich der Spezialpapiere gehören die Dekorpapiere wegen der ständig wachsenden Anwendungen zu den Papieren mit den höchsten Zuwachsraten. Aufgrund des hohen optischen Anspruchs werden höchste Anforderungen an das Dekorpapier gestellt. Ausgangspunkt für die Herstellung derartiger Dekorpapiere sind spezielle Rohpapiertypen, welche eine schwache Masseleimung aufweise und im Wesentlichen aus Zellstoffen, Pigmenten, Füllstoffen und üblichen Additiven bestehen. Die Flächengewichte von Dekorpapieren liegen üblicherweise zwischen 20 g/m$^2$ bis 1000 g/m$^2$, insbesondere zwischen 30 g/m$^2$ und 300 g/m$^2$. Das Dekorpapier kann gestrichen oder ungestrichen sein, wobei seine Oberfläche Druckfarben halten und binden muss, jedoch trotzdem die Aufnahme einer definierten Menge wässrigen Harzes bzw. Bindemittel ermöglichen. Hierbei wird zwischen Vorimprägnaten, welche bereits bei der Papierherstellung imprägniert werden und Postimprägnaten unterschieden, welche nach der Papierherstellung und vor der Verbindung mit der Folienschicht imprägniert werden. Dabei soll das Dimensionsverhalten des Papiers über die Weiterverarbeitungsstufen hinweg beherrschbar bleiben. Wichtig bei der Dekorpapiererzeugung sind weiterhin Malung und Entstippung. Durch immer höhere Vorgaben bei den Glättwerten zur Verbesserung der Bedruckbarkeit steigen die Anforderungen an den Satinageprozess stetig an. Zur optimalen Bedruckbarkeit erfordert das Papier eine besonders gute Formation, Glätte und Dimensionsstabilität.

Erfindungsgemäß ist festgestellt worden, dass letztlich nur teilweise imprägnierte, also nicht durchimprägnierte Papiere, und zwar unabhängig davon, ob es sich hierbei um Vor- oder Postimprägnate handelt, zu erheblich verbesserten Eigenschaften der Deckschicht gegenüber einer Deckschicht mit nicht imprägniertem oder durchimprägniertem Papier führen. Insbesondere ergeben sich verbesserte Eigenschaften hinsichtlich Schäl-, Haft-, Spalt- und Abhebefestigkeit. Da das härtbare Harz in Trägermaterialien imprägniert wird, die im fertigen Verbundmaterial sichtbar sind, muss das Harz nach dem Härten transparent sein, vorzugsweise farblos transparent. Zudem ist es wünschenswert, dass das gehärtete Harz lichtecht bzw. UV-beständig ist, d.h. sich im Lauf der Zeit nicht durch Lichteinfluss verfärbt. Besonders bevorzugte Harze, die die Anforderungen an Transparenz und Lichtechtheit erfüllen, können ausgewählt werden aus Aminoplastharzen, Melaminharzen, Melaminetherharzen, Harnstoffharzen, Polyesterharzen, Acrylatdispersionen, Polyurethandispersionen, Epoxidharz-Dispersionen und Mischungen daraus.

Je nach eingesetzter Papiertype kann neben dem zur Imprägnierung genutzten Harz bzw. Bindemittel (Postimprägnat) auch die Druckfarbe (Vorimprägnat) die Grenzschicht zwischen Papier und Folienschicht darstellen. Zur Gewährleistung entsprechender Verbundhaftungen müssen in diesem Fall die eingesetzten Druckfarben chemische Kompatibilität zu Harz und Haftvermittler aufzeigen. Dies wird durch den Einsatz von Additiven und/oder entsprechenden Bindemitteln, insbesondere auf Acrylat- oder Urethanbasis erzielt. Je nach Druckverfahren variiert der Bindemittelanteil zwischen 12% - 25%, wobei der Anteil an Additiven bis zu 5% betragen kann. Analog zu den Bestandteilen der Folienschicht bzw. den eingesetzten Harzsystemen müssen die verwendeten Druckfarben lichtecht bzw. UV-beständig sein.

Nachfolgend wird lediglich auf Dekorpapier eingegangen. Dennoch kann grundsätzlich auch jedes andere Papier, und insbesondere jedes andere Spezialpapier, zum Einsatz kommen. Die nachstehenden Ausführungen zum Dekorpapier gelten daher in gleicher Weise grundsätzlich auch für andere Papiere.

Im Folgenden wird auf verschiedene Eigenschaften eingegangen, die sich durch das erfindungsgemäße Papier, also das Vorimprägnat oder das später im Prozess teilbeharzte Dekorpapier, bzw. die nur teilweise Imprägnierung des Papiers sowie die Folienschicht ergeben. Diese Eigenschaften hängen jedenfalls auch vom Grad der teilweisen Imprägnierung, vom verwendeten Harz/Bindemittel, vom eingesetzten Rohpapier und von der Abstimmung von Papier, Bindemittel, Imprägnierungsgrad, Druckfarbe und/oder Haftvermittler ab. Im Hinblick auf diese Variationsmöglichkeiten erfolgt die Definition des erfindungsgemäßen Papiers bzw. der erfindungsgemäßen Deckschicht anhand der erreichten Eigenschaften.

Eine für eine Platte mit Deckschicht wichtige Eigenschaft ist die Schälfestigkeit. Die Schälfestigkeit bezeichnet die Widerstandsfähigkeit der Verbindung gegen Kräfte, die ausschließlich auf einen schmalen Randbereich am Ende der Verbindung einwirken und dadurch zu Spannungsspitzen führen. Erfindungsgemäß ist vorgesehen, dass die Schälfestigkeit der Deckschicht gegenüber dem Plattengrundkörper größer 1,5 N/cm und bevorzugt größer 2 N/cm beträgt. Insbesondere liegt die Schälfestigkeit zwischen 2,1 N/cm bis 3,5 N/cm. Bei Versuchen, die durchgeführt worden sind, sind Schälfestigkeitswerte bei Verwendung des erfindungsgemäßen, teilweise imprägnierten Papiers zwischen 2 bis 3 N/cm ermittelt worden. Bei unbeharzten bzw. nicht imprägnierten Dekorpapieren aus dem Stand der Technik sind lediglich Schälfestigkeitswerte kleiner 1 N/cm und bei Verwendung von durchimprägnierten Dekorpapieren von kleiner 0,5 N/cm ermittelt worden. Derart verbesserte Schälfestigkeitswerte bei Verwendung des erfindungsgemäßen Papiers konnten nicht ohne Weiteres erwartet werden. An sich war man zunächst davon ausgegangen, dass unbeharzte Dekorpapiere eine sehr gute Schälfestigkeit haben würden, da das unbeharzte Dekorpapier eine vergleichsweise hohe Porosität aufweist und gerade bei Verwendung einer unterseitigen Leim- oder Klebeschicht ein tiefes Eindringen des Verbindungsmittels in das Papier erlaubt. Dennoch ergibt sich bei Verwendung des erfindungsgemäßen Papiers eine um über 100 % verbesserte Schälfestigkeit. Bei durchimprägnierten Papier ist festgestellt worden, dass dieses sowohl im Papier als auch zwischen der Kunststoffschicht und der eigentlichen Papierschicht im Wesentlichen zwischen den Schichten spaltet. Durch die Durchimprägnierung ist das Papier höher versiegelt und dadurch nicht so offenporig. Von daher besteht eine geringere Haftfestigkeit zwischen der Kunststoffschicht und dem üblicherweise verwendeten Dekorpapier.

Ein weiteres Charakterisierungskriterium der erfindungsgemäßen Deckschicht ist der Gitterschnitt-Kennwert gemäß ISO 2409. Mit Hilfe des Gitterschnitts kann die Qualität der Haftfestigkeit einer Beschichtung geprüft werden. Bei einem Gitterschnitt werden sechs parallele Schnitte mit einem Cuttermesser angebracht, die bis auf den Untergrund gehen, jedoch ohne ihn zu verletzen. Der Abstand der Schnitte beträgt 1 bis 3 mm, abhängig von der Schichtdicke der Beschichtung. Schichtdicken zwischen 60 und 120 mm erfordern dabei einen Abstand von 2 mm. Niedrigere Schichtdicken erfordern einen Abstand von 1 mm, höhere einen Abstand von 3 mm. Danach werden sechs weitere Ritzschnitte im rechten Winkel angebracht, so dass ein gleichmäßiges Quadratmuster entsteht. Auf das entstandene Quadrat wird ein Klarsicht- oder ein Kreppklebeband mit einer Klebkraft von 8 bis 10 N / 25 mm aufgeklebt. Dieses wird in einer Zeit von 0,5 bis 1 sec. in einem Winkel von 60 ° abgezogen, wobei dies lediglich bei harten Untergründen vorgeschrieben ist. Zuletzt wird das verbliebene Gitter begutachtet. Je nach Zustand unterscheidet man Gitterschnitt-Kennwerte (Gt) von 0 (sehr gute Haftfestigkeit) bis 5 (sehr schlechte Haftfestigkeit).

Bei einem Kennwert Gt = 0 sind vollkommen glatte Schnitträndern ohne Abplatzungen vorgesehen. Es ergibt sich ein vollkommen sauber abgebildetes Gitterschnittraster ohne jeglichen Beschichtungsverlust.

Bei einem Kennwert Gt = 1 sind leichte Abplatzungen an den Schnittpunkten der Gitterlinien vorgesehen, wobei sich ein Beschichtungsverlust von nicht wesentlich mehr als 5 % der gesamten Gitterschnittfläche ergibt.

Bei Gt = 2 sind Abplatzungen längs der Schnittränder und/oder an den Schnittpunkten der Gitterlinien von deutlich mehr als 5 % bis unwesentlich mehr als 15 % der gesamten Gitterschnittfläche vorgesehen.

Bei Gt = 3 sind Abplatzungen längs der Schnittränder und/oder von Quadraten (ganz und teilweise) vorgesehen, wobei sich ein Beschichtungsverlust von deutlich mehr als 15 % bis unwesentlich mehr als 35 % der gesamten Gitterschnittfläche ergibt.

Bei Gt = 4 ergibt sich ein ähnliches Ergebnis wie bei Gt gleich 3, jedoch mit einem Beschichtungsverlust von deutlich mehr als 35 % bis unwesentlich mehr als 65 % der gesamten Gitterschnittfläche.

Schließlich bedeutet Gt = 5, dass Abplatzungen vorgesehen sind, deren Beschichtungsverlust deutlich mehr als 65 % der gesamten Gitterschnittfläche beträgt und die demnach nicht mehr mit dem Kennwert "4" bewertet werden können.

Bei durchgeführten Versuchen ist festgestellt worden, dass die erfindungsgemäße Deckschicht einen Gitterschnitt-Kennwert Gt gemäß ISO 2409 von 3 oder besser, insbesondere von 1 oder 0 aufweist.

Bei Versuchen mit einem unbeharzten Dekorpapier und mit einem durchimprägnierten Dekorpapier sind Gitterschnitt-Kennwerte erreicht worden, die - unerwartet - vergleichsweise schlecht waren. So sind dort Gt-Werte zwischen 4 und 5 ermittelt worden. Bei Untersuchungen, die anschließend durchgeführt worden sind, ist festgestellt worden, dass sich die oberseitige Kunststoffbeschichtung offensichtlich sehr schlecht einerseits mit unbeharztem Dekorpapier und andererseits mit durchbeharztem Dekorpapier verbindet, was entsprechende schlechte Gitterschnitt-Kennwerte zur Folge hat. Es ist festgestellt worden, dass die Kunststoffverbindung eine gute und feste Verbindung mit dem unbeharzten, offenporigen Dekorpapier hat. Allerdings spaltet das Papier. Dem gegenüber ist ein Durchimprägnat höher versiegelt und dadurch nicht so offenporig wie ein unbeharztes Dekorpapier oder ein teilimprägniertes Dekorpapier. Somit ergibt sich eine geringere Haftfestigkeit zwischen der Kunststoffschicht und dem Dekorpapier, was zu einer Spaltung im Wesentlichen zwischen der Kunststoffschicht und der Papierschicht führt.

Weiterhin weist die erfindungsgemäße Deckschicht, also die Papierschicht einschließlich der Folienschicht aus elastischem Kunststoff, eine erheblich verbesserte Spaltfestigkeit gegenüber einer Deckschicht aus einer Folienschicht in Verbindung mit einem unbeharzten Dekorpapier einerseits und einer Folienschicht und einem durchbeharzten Dekorpapier andererseits auf.

Bei Versuchen ist die Spaltfestigkeit nach der Scott Bond-Methode ermittelt worden. Dabei ist ein Probestreifen der Deckschicht mit doppelseitigem Klebeband auf einem festen Untergrund, wie einem Amboss, befestigt worden. Oberseitig ist ein Winkel in gleicher Weise auf den Prüfling angebracht worden. Der gesamte Aufbau wird definiert zusammengedrückt und anschließend in eine Messhalterung eingespannt. Durch Auslösen eines Pendels wird der Winkel vom Prüfling abgeschlagen. Dabei reduziert sich die Energie des Pendels. Der Energieverlust wird mit der Probenfläche in Relation gesetzt und als Mittelwert ($J/m^2$) aus mehreren Messungen angegeben. Dieser Wert beschreibt somit die Energieaufnahme bezogen auf die Kontaktfläche.

In diesem Zusammenhang wurde bei einer Deckschicht mit einem unbeharzten Dekorpapier ein Wert von 600 $J/m^2$ und mit einem durchimprägnierten Dekorpapier ein Wert von 1000 $J/m^2$ ermittelt. Demgegenüber ist bei einer Deckschicht mit einem teilimprägnierten Papier ein unerwartet hoher Wert von 2040 $J/m^2$ erreicht worden.

Aus diesen konkret ermittelten Werten resultiert, dass je nach Wahl des Roh-Dekorpapiers und des zur Teilimprägnierung verwendeten Harzes/Bindemittels die Spaltfestigkeit der erfindungsgemäßen Deckschicht größer 1500 $J/m^2$ und bevorzugt größer 1800 $J/m^2$ liegen sollte.

Darüber hinaus sollte die erfindungsgemäße Deckschicht eine Abhebefestigkeit gemäß EN 13329 größer 0,7 $N/mm^2$, bevorzugt zwischen 0,95 und 1,33 $N/mm^2$ und insbesondere zwischen 1 und 1,3 $N/mm^2$ aufweisen. Bei durchgeführten Versuchen ist festgestellt worden, dass die erfindungsgemäße Deckschicht im Wesentlichen die gleiche Abhebefestigkeit erzielt wie eine Deckschicht mit einem durchimprägnierten Dekorpapier, nämlich von etwa 1,18 $N/mm^2$, während bei einer Deckschicht mit einem unbeharzten Dekorpapier lediglich eine Abhebefestigkeit von 0,46 $N/mm^2$ erzielt worden ist.

Weitere wichtige Kennwerte sind die Kantenquellung und die Wasseraufnahme des Rohpapiers, bevor dieses mit der außenseitigen Folienschicht beschichtet wird. Bei der Kantenquellung handelt es sich um die Dickenzunahme des Rohpapiers im Bereich der Kante, nachdem das Rohpapier über einen Zeitraum von 60 min. Wasser ausgesetzt worden ist. Es ist festgestellt worden, dass die Teilimprägnierung des erfindungsgemäßen Papiers so sein sollte, dass sich eine Kantenquellung zwischen 10 und 35 %, bevorzugt zwischen 15 und 30 % und insbesondere zwischen 20 und 25 % ergibt. In einem konkreten Anwendungsfall der erfindungsgemäßen Deckschicht ist eine Kantenquellung von 22,46 % ermittelt worden. Bei einer Deckschicht mit einem unbeharzten Dekorpapier ist eine Kantenquellung von 43,07 % und bei Verwendung eines durchimprägnierten Dekorpapiers eine erwartete niedrige Kantenquellung von 8,8 % ermittelt worden.

Die Wasseraufnahme in Prozent ergibt sich aus der Formel

$$WA = 100 \times (m_q - m_e)/m_e,$$

wobei $m_q$ die Masse der gequollenen Probe und $m_e$ die Masse der getrockneten Probe bezeichnet. Das erfindungsgemäß verwendete teilimprägnierte Papier weist als Rohpapier eine Wasseraufnahme nach 15 min. zwischen 30 und 60 %, bevorzugt zwischen 40 und 50 % und insbesondere zwischen 43 und 47 % auf. Bei einem Versuch mit einem Vorimprägnat ist eine Wasseraufnahme von 45,14 % erzielt worden. Bei einem unbeharzten Dekorpapier ist eine Wasseraufnahme von 94,77 % und bei einem durchimprägnierten Dekorpapier eine Wasseraufnahme von 37,89 % gemessen worden.

Im Ergebnis ist damit festzustellen, dass bei Verwendung eines durchimprägnierten Dekorpapiers gegenüber einem teilweise imprägnierten Dekorpapier nur im Bereich der Kantenquellung und Wasseraufnahme günstigere Eigenschaften erzielt werden. Diese günstigeren Werte sind allerdings insoweit zu relativieren, da bei verlegten Platten sich im Bereich der Kanten ohnehin ein Dichteffekt durch die elastische Kunststoffbeschichtung ergibt, so dass letztlich ohnehin vergleichsweise wenig Feuchtigkeit an das Dekorpapier und insbesondere an die Kanten gelangen kann. Darüber hinaus ergeben sich zwischen dem durchimprägnierten Dekorpapier und dem teilweise imprägnierten Dekorpapier bei der Abhebefestigkeit im Wesentlichen die gleichen Werte. Jedoch ist die erfindungsgemäße Deckschicht mit dem teilweise imprägnierten Dekorpapier gegenüber einer Deckschicht mit voll- bzw. durchimprägnierter Deckschicht bei der Schäl-, Haft- und Spaltfestigkeit deutlich überlegen. Eine Deckschicht mit einem unbeharzten Dekorpapier ist der erfindungsgemäßen Deckschicht in allen Belangen unterlegen.

Eine teilweise Imprägnierung der Papierschicht liegt letztlich immer dann vor, wenn ein Imprägnierungsgrad größer 0 % wie bei unbeharzten Dekorpapieren, und kleiner 100 %, wie bei durchbeharzten Papieren vorliegt. Hierbei ist grundsätzlich jeder Einzelwert und jedes Zwischenintervall innerhalb der Intervallgrenzen möglich. Bevorzugt sind jedoch Imprägnationsgrade zwischen 5 und 50 %, weiter bevorzugt zwischen 10 und 40 %, weiter bevorzugt zwischen 15 und 35 % und insbesondere zwischen 20 und 30%.

Die Erfindung betrifft auch eine mehrschichtige Folie, die als Vorprodukt zur Herstellung der erfindungsgemäßen Deckschicht geeignet ist und durch Anwendung von Druck und/oder Wärme stoffschlüssig mit einem teilimprägnierten Papier verbunden werden kann. Die Folie ist Gegenstand des Anspruches 10. Vorteilhafte Ausgestaltungen der Folie werden in den Ansprüchen 11 bis 20 beschrieben.

Im Zusammenhang mit der vorliegenden Erfindung ist im Übrigen festgestellt worden, dass es vorteilhaft ist, wenn der Grad der Imprägnierung des Papiers von der Ober- zur Unterseite hin zunimmt. Dabei bezeichnet die Oberseite des Papiers die Seite, auf der die Folienschicht aus dem elastischen Kunststoff vorgesehen ist, während die Unterseite die dem Plattengrundkörper zugewandte Seite der Papierschicht darstellt. Letztlich ist es so, dass eine stärkere Imprägnierung an der Unterseite zu einer guten Verbindung des Papiers mit dem Plattengrundkörper über die jeweilige Verbindungsschicht (Kleb- oder Leimschicht) führt, während der verringerte Imprägnierungsgrad an der Oberseite zu einer sehr guten Verbindung mit der außenseitigen Folienschicht führt. Dabei versteht es sich, dass es je nach Wahl des Kunststoffmaterials für die Folienschicht und des verwendeten Materials für die jeweilige Verbindungsschicht grundsätzlich auch möglich ist, eine gleichmäßige Teilimprägnierung zu haben.

Des Weiteren betrifft die vorliegende Erfindung nicht nur die Deckschicht als solche, sondern auch die Kombination der mit dem Plattengrundkörper verbundenen Deckschicht, also einer entsprechenden Platte.

Im Übrigen versteht es sich, dass in den vorgenannten Intervallen und Bereichsgrenzen jegliche Zwischenintervalle und Einzelwerte enthalten und als erfindungswesentlich offenbart anzusehen sind, auch wenn diese Zwischenintervalle und Einzelwerte nicht konkret angegeben sind.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung oder deren Rückbeziehung.

Es zeigt

Fig. 1 eine schematische Querschnittsansicht einer Ausführungsform einer erfindungsgemäßen Deckschicht,

Fig. 2 eine schematische Querschnittsansicht einer weiteren Ausführungsform einer erfindungsgemäßen Deckschicht,

Fig. 3 eine schematische Ansicht einer bei der erfindungsgemäßen Deckschicht verwendeten Papierschicht,

Fig. 4 eine andere Ausführungsform einer bei der erfindungsgemäßen Deckschicht verwendeten Papierschicht,

Fig. 5 eine schematische Querschnittsansicht einer erfindungsgemäßen Platte mit einer Deckschicht,

Fig. 6 eine schematische Querschnittsansicht einer erfindungsgemäßen Deckschicht,

Fig. 7 den Schichtenaufbau einer bei der erfindungsgemäßen Deckschicht verwendeten Folie und

Fig. 8 eine andere Ausführungsform einer zur Fertigung der Deckschicht geeigneten Folie.

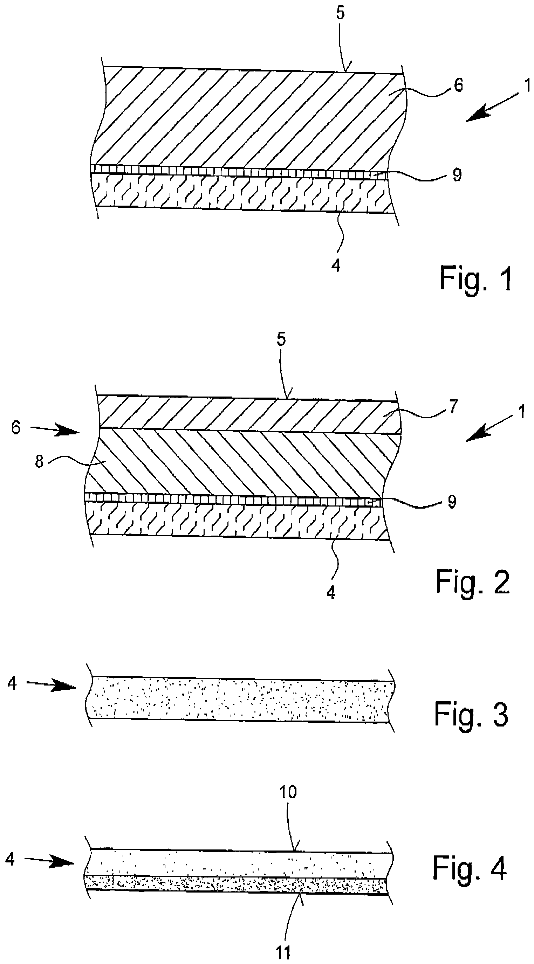

In den Fig. 1 und 2 sind unterschiedliche Ausführungsformen einer Deckschicht 1 dargestellt, die für eine einen Plattengrundkörper 2 aufweisende Platte 3 vorgesehen ist. Die Platte 3 kann unterschiedliche Anwendungen haben. Insbesondere kommt die Platte als Bodenbelags-, Wand- oder Deckenverkleidungsplatte oder auch als Möbelbauteil, Gebäude-, Abdeck- oder Trockenausbauplatte sowie als Fassaden-, Paneel- oder Dielenelement oder als Sichtblende in Frage. Ein bevorzugtes Anwendungsgebiet der Deckschicht 1 ist die Verwendung als sogenanntes Overlay zur Fertigung von trittschallgedämmten Fußböden.

Die Deckschicht 1 weist eine Papierschicht 4 und eine die Außenseite 5 der Deckschicht 1 bildende Folienschicht 6 aus einem elastischen Kunststoff auf. Die Ausführungsformen der Fig. 1 und 2 unterscheiden sich dahingehend, dass die Folienschicht 6 bei der Ausführungsform gemäß Fig. 1 einschichtig ist, während sie bei der Ausführungsform gemäß Fig. 2 zweischichtig ist.

Die Folienschicht 6 besteht, unabhängig davon, ob sie ein- oder mehrschichtig ist, aus einem physikalisch oder chemisch vernetzten Polymer, wobei thermoplastische Elastomere auf Polyurethanbasis bevorzugt sind. Bei dem zweischichtigen Aufbau gemäß Fig. 2, bei dem eine Außenschicht 7 und eine Funktionsschicht 8 vorgesehen sind, ist es bevorzugt so, dass die Außenschicht 7 eine größere Shorehärte als die Funktionsschicht aufweist. Die Außenschicht 7 weist vorliegend eine Shorehärte von Shore 90 A bis Shore 80 D auf, während die Funktionsschicht 8 eine Shorehärte von 50 A bis maximal Shore 90 A aufweist. Die Dicke der Funktionsschicht 8 ist um den Faktor 2 bis 100 größer als die Dicke der Außenschicht. Bevorzugt weist die Außenschicht 7 eine Schichtdicke von 5 $\mu$m bis 100 $\mu$m und die Funktionsschicht 8 eine Schichtdicke zwischen 100 $\mu$m und 500 $\mu$m auf. Auf der Außenseite 5 kann eine durch Prägen erzeugte dreidimensionale Oberflächenstruktur vorgesehen sein, die beispielsweise eine Holzmaserung, die auf die Papierschicht 4 gedruckt ist, entspricht.

Nicht dargestellt ist, dass die Folienschicht 6 auch mehr als zwei Schichten aufweisen kann. So ist ein drei- oder vierschichtiger Aufbau ohne Weiteres möglich. Grundsätzlich sind beliebig viele Schichten möglich. Insbesondere ist es möglich, dass der Schichtenaufbau der Folienschicht 6 mit den Schichten 7 und 8 alternierend erfolgt.

Insgesamt ist die Folienschicht 6 transparent, so dass der in der Regel auf der Papierschicht 4 vorgesehene Druck durch die Folienschicht 6 hindurch erkennbar ist. Zwischen der Papierschicht 4 und der Folienschicht 6 befindet sich in den dargestellten Ausführungsbeispielen eine Haftvermittlerschicht 9. Hierbei kann es sich beispielsweise um eine Kleb- oder Leimschicht handeln. Allerdings kann grundsätzlich auch auf die Haftvermittlerschicht verzichtet werden, wenn durch Wahl eines entsprechenden Materials der Folienschicht 6 und der Papierschicht 4 eine unmittelbare Verbindung zwischen den Schichten 4 und 6 möglich ist.

Vorgesehen ist nun, dass die Papierschicht 4, bei der es sich vorliegend um ein Dekorpapier handelt, nur teilweise imprägniert ist. Eine derartige Teilimprägnierung unterscheidet sich von einer Voll- oder Durchimprägnierung dadurch, dass bei einem teilimprägnierten Dekorpapier das maximale Porenvolumen, das zur Aufnahme von Bindemittel/Harz zur Verfügung steht, nur teilweise ausgefüllt ist, also ein Anteil mit einem freien Porenvolumen verbleibt. Dementsprechend ist der Grad des bei der Imprägnierung aufgenommenen Bindemittels bei einem teilimprägnierten Dekorpapier geringer als bei einem voll- oder durchimprägnierten Dekorpapier. Bei der Papierschicht 4 kann es sich um ein sogenanntes Vorimprägnat handeln. Ein Vorimprägnat stellt ein Dekorpapier dar, das bereits bei der Papierherstellung teilweise imprägniert worden ist. Grundsätzlich ist es aber auch möglich, ein Dekorpapier nach der Papierherstellung nur teilweise zu imprägnieren. Bevorzugt liegt der Imprägnierungsgrad zwischen 20 und 80 %. Dabei bezeichnet der Imprägnierungsgrad die relative Aufnahmefähigkeit des Dekorpapiers zur Aufnahme von Bindemittel. Ein vollständig imprägniertes oder durchimprägniertes Dekorpapier hat einen Imprägnierungsgrad von 100 %, während ein unbeharztes Dekorpapier ein Imprägnierungsgrad von 0 % hat.

In Fig. 3 ist eine Papierschicht 4 dargestellt, die nach dem Tränken mit dem Bindemittel bzw. Imprägnierungsmittel einen über die Dicke der Papierschicht gleichmäßigen Imprägnierungsgrad von vorliegend im Bereich von 30 % aufweist. Demgegenüber ist bei der in Fig. 4 dargestellten Ausführungsform vorgesehen, dass der Grad der Imprägnierung von der Oberseite 10 der Papierschicht, die der Folienschicht 6 zugewandt ist, zur Unterseite 11 hin zunimmt. Grundsätzlich kann eine kontinuierliche bzw. gleichmäßige Zunahme des Imprägnierungsgrads über die Schichtdicke vorgesehen sein. Im dargestellten Ausführungsbeispiel ist etwa die untere Hälfte der Dicke der Papierschicht 4 mit einem höheren Imprägnierungsgrad, vorliegend etwa 35 % bis 40 %, und der obere Teil mit einem geringeren Imprägnierungsgrad, vorliegend etwa 25 % bis 30 %, versehen. Zur teilweisen Imprägnierung der Papierschicht 4 können duroplastische Harze oder acrylatische Bindemittel eingesetzt werden. Insbesondere werden Harze auf Aminoplastbasis sowie Latex- oder PU-Dispersionen eingesetzt.

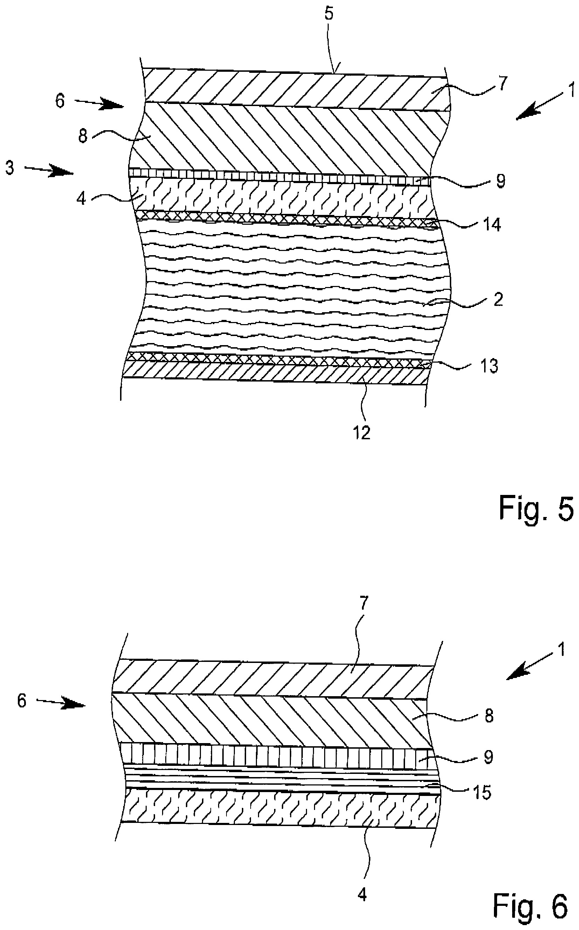

In Fig. 5 ist schematisch der Schichtaufbau einer Platte 3 dargestellt. Die Platte 3 weist einen Plattengrundkörper 2 aus einem Holzmaterial auf. Hierbei kann es sich beispielsweise um eine HDF- oder MDF-Platte handeln. Es versteht sich, dass statt eines Holzmaterials auch andere Trägermaterialien vorgesehen sein können, wie Kunststoffmaterialien, Metalle, Stahl, Gips oder dergleichen sowie Kompositmaterialien. Die Dicke des Plattengrundkörpers 2 beträgt wenigstens 5 mm. Größere Dicken sind ohne Weiteres möglich. Nicht dargestellt ist, dass die Platte 3 im Bereich des Plattengrundkörpers 2 randseitig profiliert ist, um über die Profilierung mit benachbarten Platten 3 form- und/oder reibschlüssig verbunden zu werden. Bevorzugt weist der Plattengrundkörper 2 auf gegenüberliegenden Seiten sogenannte Click-Verbindungsprofile auf, die in Art eines Nut-Feder-Systems funktionieren. Im Übrigen weist die Platte, insbesondere wenn sie als Paneelelement eingesetzt wird, die Form eines langgestreckten Rechtecks auf. Die Abmaße sind dabei grundsätzlich beliebig.

Unterseitig ist an der Platte 3 ein Gegenzug 12 vorgesehen. Dieser ist über eine Haftvermittlerschicht 13, bei der es sich beispielsweise um eine Kleb- oder Leimschicht handelt, mit dem Plattengrundkörper 2 verbunden. Bei dem Gegenzug 12 handelt es sich um eine Formstabilitätsschicht. Es wird ausdrücklich darauf hingewiesen, dass die Realisierung des Gegenzugs 12 grundsätzlich zweckmäßig und in der Praxis jedenfalls bei Paneelelementen die Regel ist, dieser jedoch nicht notwendigerweise vorgesehen sein muss.

Oberseitig befindet sich auf dem Plattengrundkörper 2 die Deckschicht 1, die über eine Haftvermittlerschicht 14, bei der es sich um eine Leim- oder Klebschicht handelt, mit dem Plattengrundkörper 2 verbunden ist. Allerdings kann grundsätzlich auch auf die Haftvermittlerschicht 14 verzichtet werden, wenn sich bei Wahl eines entsprechenden Materials die Folienschicht 6 unmittelbar mit der Papierschicht 4 verbindet.

Im Zusammenhang mit der Erfindung sind Versuche mit einer Deckschicht 1 entsprechend Fig. 2, einer Deckschicht entsprechend Fig. 2 mit einem unbeharzten Dekorpapier (Imprägnierungsgrad von 0 %) und einer Deckschicht entsprechend Fig. 2 jedoch in Verbindung mit einem durchimprägnierten Dekorpapier (Imprägnierungsgrad von 100 %) durchgeführt worden. Dabei sind die Schälfestigkeit, die Haftfestigkeit, die Spaltfestigkeit und die Abhebefestigkeit mit folgendem Ergebnis untersucht worden:

| | Schälfestigkeit | Haftfestigkeits-Prüfung Gitterschnitt ISO 2409 | Spaltfestigkeit nach Scott Bond-Methode | Abhebefestigkeit EN 13329 |
|---|---|---|---|---|
| Deckschicht entsprechend Fig. 2 mit teilbeharztem Dekorpapier | 2,2-2,8 N/cm | Stufe 0 | 2040 J/m$^2$ | 1,18 N/mm$^2$ |
| Deckschicht entsprechend Fig. 2 mit unbeharztem Dekorpapier | <1 N/cm | Stufe 5 | 600 J/m$^2$ | 0,46 N/mm$^2$ |
| Deckschicht entsprechend Fig. 2 mit durchbeharztem Dekorpapier | < 0,5 N/cm | Stufe 5 | 1000 J/m$^2$ | 1,17 N/mm$^2$ |

Des Weiteren ist das Teilimprägnat, also das Rohpapier entsprechend Fig. 3, ein unbeharztes Dekorpapier und ein durchimprägniertes Dekorpapier als solches im Hinblick auf die Kantenquellung und die Wasseraufnahme mit folgendem Ergebnis untersucht worden:

| | Kantenquellung Rohpapier 60 min | Wasseraufnahme Rohpapier 15 min |
|---|---|---|
| Teilimprägniertes Dekorpapier (Vorimprägnat) | 22,46 % | 45,14 % |
| Nicht imprägniertes Dekorpapier | 43,07 % | 92,77 % |
| Durchimprägniertes Dekorpapier | 8,80 % | 37,89 % |

Fig. 6 zeigt eine Querschnittsansicht einer weiteren Ausführungsform einer erfindungsgemäßen Deckschicht 1. Die Deckschicht 1 ist im dargestellten Ausführungsbeispiel fünfschichtig ausgebildet. Neben der Außenschicht 7, die die Nutzschicht bildet, und der unterhalb der Außenschicht 7 liegenden Funktionsschicht 8 ist die Haftvermittlerschicht 9 vorgesehen. Die Schichten 7, 8 und 9 bilden die Folienschicht 6. Die Haftvermittlerschicht 9 bildet die Grenzschicht zum Papier. Unterhalb der Haftvermittlerschicht 9 befindet sich ein teilimprägniertes Dekorpapier, das eine untere Papierschicht 4 und eine darüberliegende Grenzschicht 15 zur Folienschicht 6 aufweist. Diese Grenzschicht 15 kann von dem zur Imprägnierung der Papierschicht genutzten Harz bzw. Bindemittel und/oder von der Druckfarbe gebildet sein.

Die Folienschicht 6 kann durch eine Extrusionsbeschichtung auf die Papierschicht 4 aufgebracht werden, die als teilimprägniertes Vorimprägnat oder als teilimprägniertes Papier bereitgestellt wird. Die Folienschicht 6 kann auch in Form einer vorgefertigten, mehrschichtigen Folie 16 bereitgestellt werden, die mittels eines Kaschiervorganges auf das teilimprägnierte Papier aufgebracht wird. Die Fig. 7 zeigt den Schichtenaufbau einer für die erfindungsgemäße Deckschicht geeigneten mehrschichtigen Folie 16. Die mehrschichtige Folie 16 weist eine oberseitige Nutzschicht 17 aus einem physikalisch oder chemisch vernetzten Polymer, mindestens eine ebenfalls aus einem physikalisch oder chemisch vernetzten Polymer bestehende Funktionsschicht 8 und eine unterseitige Haftvermittlerschicht 9 auf. Die Funktionsschicht 8 ist zwischen der Nutzschicht 17 und der Haftvermittlerschicht 9 angeordnet und weist im Ausführungsbeispiel der Fig. 7 über ihre gesamte Dicke eine geringere Shorehärte auf als die Nutzschicht 17. Die Haftvermittlerschicht 9 ist so ausgebildet, dass sie durch Anwendung von Druck und/oder Temperatur einen stoffschlüssigen Verbund mit einem teilimprägnierten Papier bildet. Die Haftvermittlerschicht besteht vorzugsweise aus einem oder mehreren Copolymeren auf Polyamid-, Acrylat- oder Urethanbasis.

Die Nutzschicht 17 und die Funktionsschicht 8 der in Fig. 7 dargestellten Folie sind koextrudiert. Die Funktionsschicht der Folie absorbiert bei den zuvor beschriebenen Anwendungen mechanische Stöße und hat einen wirksamen trittschalldämmenden Effekt. Die Nutzschicht verleiht der Oberfläche eine hohe Kratzfestigkeit, geringe Abriebswerte sowie eine angenehme Haptik. Bei der Verwendung der Deckschicht auf einem Laminatpaneel wird eine angenehme Fußwärme erzielt.

Die Nutzschicht kann insbesondere eine Shorehärte von größer 90 A bis Shore 80 D aufweisen, wobei eine Härte von etwa Shore 60 D bevorzugt ist. Die Shorehärte der Funktionsschicht liegt insbesondere im Bereich Shore 50 A bis maximal Shore 90 A, wobei für die Funktionsschicht eine Shorehärte von etwa Shore 70 A bevorzugt ist.

Die Nutzschicht 17 und die Funktionsschicht 8 können aus thermoplastischen Elastomeren auf Olefinbasis (TPE-O), vernetzten thermoplastischen Elastomeren auf Olefinbasis (TPE-V), thermoplastischen Elastomeren auf Urethanbasis (TPE-U), thermoplastischen Polyesterelastomeren (TPE-E), Styrol-Block-Copolymere (TPE-S) oder thermoplastischen Copolyamiden (TPE-A) bestehen. Bevorzugt bestehen die Nutzschicht und die Funktionsschicht aus thermoplastischen Elastomeren auf Urethanbasis (TPE-U). Die Nutzschicht kann eine durch Prägen erzeugte dreidimensionale Oberflächenstruktur aufweisen, wobei feine Strukturen, wie sie beispielsweise für Furniere typisch sind, in die Nutzschicht 17 dauerhaft eingebracht werden können.

Die Dicke der Folienschichten 17, 8 ist abhängig von dem Verwendungszweck und kann in einem weiten Parameterbereich variiert werden. Für die zuvor beschriebenen Anwendungen weisen die Nutzschicht 17 und die Funktionsschicht 8 zusammen zweckmäßig eine Gesamtdicke zwischen 50 $\mu$m und 2000 $\mu$m auf, wobei die Dicke der Funktionsschicht 8 um den Faktor 2 bis 100 größer ist als die Dicke der Nutzschicht 17.

Die Folie ist für die vorgenannten Anwendungen vorzugsweise transparent. Ferner kann die Nutzschicht 17 Additive beispielsweise zur Verbesserung der Flammhemmung, der Verbesserung des elektrostatischen Verhaltens und dergleichen enthalten.

In dem in Fig. 8 dargestellten Ausführungsbeispiel weist die Funktionsschicht 8 der Folie eine Schichtenanordnung 18 aus einer Mehrzahl von koextrudierten Schichten 19, 20 auf, wobei die Schichten jeweils aus einem physikalisch oder chemisch vernetzten thermoplastischen Polymer bestehen. In der Schichtenanordnung sind harte Schichten 19, die eine entsprechende oder vergleichbare Shorehärte wie die Nutzschicht 17 aufweisen, und weichere Schichten 20 alternierend angeordnet. Dabei grenzt eine weichere Schicht 20 an die Unterseite der Nutzschicht 17 an. Die Abfolge harter Schichten und weicher Schichten bewirkt eine bessere Verteilung von Druckbelastungen und hat eine verbesserte Körperschalldämmung bzw. Trittschalldämmung zur Folge.

**Bezugszeichenliste:**

| | |
|---|---|
| 1 | Deckschicht |
| 2 | Plattengrundkörper |
| 3 | Platte |
| 4 | Papierschicht |
| 5 | Außenseite |
| 6 | Folienschicht |
| 7 | Außenschicht |
| 8 | Funktionsschicht |
| 9 | Haftvermittlerschicht |
| 10 | Oberseite |
| 11 | Unterseite |
| 12 | Gegenzug |
| 13 | Haftvermittlerschicht |
| 14 | Haftvermittlerschicht |
| 15 | Grenzschicht |
| 16 | Mehrschichtige Folie |
| 17 | Nutzschicht der Folie |
| 18 | Schichtenanordnung der Funktionsschicht |
| 19 | Harte Schichten der Schichtenanordnung |
| 20 | Weiche Schichten der Schichtenanordnung |

**Patentansprüche**

**1.** Deckschicht (1) für eine einen Plattengrundkörper (2) aufweisende Platte (3), wie Bodenbelags-, Wand- oder Deckenverkleidungsplatte und/oder Möbelbauteil, Gebäude-, Abdeck- oder Trockenausbauplatte und/oder als Fassaden-, Paneel-oder Dielenelement, Sichtblende, wobei die Deckschicht (1) eine Papierschicht (4) und eine die Außenseite (5) der Deckschicht (1) bildende Folienschicht (6) aus einem elastischen Kunststoff aufweist,
**dadurch gekennzeichnet,**
**dass** die Papierschicht (4) als bereits bei der Papierherstellung teilimprägniertes Vorimprägnat oder als nach der Papierherstellung und vor der Verbindung mit der Folienschicht (6) teilimprägniertes Papier ausgebildet ist.

2.  Deckschicht nach Anspruch 1, **dadurch gekennzeichnet, dass** die Schälfestigkeit der Deckschicht (1) gegenüber dem Plattengrundkörper (2) größer 1,5 N/m, bevorzugt größer 2 N/cm beträgt, insbesondere zwischen 2,1 bis 3,5 N/cm beträgt.

3.  Deckschicht nach Anspruch 1 oder 2, **dadurch gekennzeichnet, dass** die Deckschicht (1) einen Gitterschnitt-Kennwert (Gt) gemäß ISO 2409 von 3 oder besser, insbesondere von 1 oder 0 aufweist.

4.  Deckschicht nach einem der vorhergehenden Ansprüche, **dadurch gekennzeichnet, dass** die Deckschicht (1) eine Spaltfestigkeit gemessen nach der Scott Bond-Methode von größer 1500 J/mm$^2$, bevorzugt größer 1800 J/mm$^2$ und insbesondere zwischen 1900 und 2200 J/mm$^2$ aufweist.

5.  Deckschicht nach einem der vorhergehenden Ansprüche, **dadurch gekennzeichnet, dass** die Deckschicht (1) eine Abhebefestigkeit gemäß EN 13329 größer 0,7 N/mm$^2$, bevorzugt zwischen 0,95 und 1,35 N/mm$^2$ und insbesondere zwischen 1,1 und 1,3 N/mm$^2$ aufweist.

6.  Deckschicht nach einem der vorhergehenden Ansprüche, **dadurch gekennzeichnet, dass** die Papierschicht (4) als Rohpapier eine Kantenquellung nach 60 min. von 10 bis 35 %, bevorzugt zwischen 15 und 30 % und insbesondere zwischen 20 und 25 % aufweist.

7.  Deckschicht nach einem der vorhergehenden Ansprüche, **dadurch gekennzeichnet, dass** die Papierschicht (4) als Rohpapier eine Wasseraufnahme nach 15 min. zwischen 30 und 60 %, bevorzugt zwischen 40 und 50 % und insbesondere zwischen 43 und 47 % aufweist.

8.  Deckschicht nach einem der vorhergehenden Ansprüche, **dadurch gekennzeichnet, dass** die Papierschicht (4) einen Imprägnierungsgrad zwischen 5 % und 50 %, bevorzugt zwischen 10 % und 40 %, weiter bevorzugt zwischen 15 % und 35 % und insbesondere zwischen 20 % und 30 % aufweist.

9.  Deckschicht nach einem der vorhergehenden Ansprüche, **dadurch gekennzeichnet, dass** der Imgrägnierungsgrad der Papierschicht (4) von der Oberseite (10) der Papierschicht (4) zur Unterseite (11) der Papierschicht (4) zunimmt.

10. Verwendung einer mehrschichtigen Folie (16), die als Vorprodukt zur Herstellung einer Deckschicht (1) nach einem der Ansprüche 1 bis 9 verwendet wird, mit

    einer oberseitigen Nutzschicht (17) aus einem physikalisch oder chemisch vernetzten Polymer,
    mindestens einer ebenfalls aus einem physikalisch oder chemisch vernetzten Polymer bestehenden Funktionsschicht (8) und
    einer unterseitigen Haftvermittlerschicht (9),

    wobei die Funktionsschicht (8) zwischen der Nutzschicht (17) und der Haftvermittlerschicht (9) angeordnet ist und über ihre gesamte Dicke oder zumindest in einer an die Nutzschicht (17) angrenzenden Zone eine geringere Shorehärte aufweist als die Nutzschicht (17) und wobei die Haftvermittlerschicht (9) durch Anwendung von Druck und/oder Temperatur einen stoffschlüssigen Verbund mit einer teilimprägnierten Papierschicht (4) bildet.

11. Verwendung einer mehrschichtigen Folie nach Anspruch 10, **dadurch gekennzeichnet, dass** die Haftvermittlerschicht (9) aus einem oder mehreren Copolymeren auf Polyamid-, Acrylat- oder Urethanbasis besteht.

12. Verwendung einer mehrschichtigen Folie nach Anspruch 10 oder 11, **dadurch gekennzeichnet, dass** die Nutzschicht (17) und die Funktionsschicht (8) koextrudiert sind.

13. Verwendung einer mehrschichtigen Folie nach einem der Ansprüche 10 bis 12, **dadurch gekennzeichnet, dass** die Nutzschicht (17) eine Shorehärte von größer Shore 90 A bis Shore 80 D aufweist.

14. Verwendung einer mehrschichtigen Folie nach einem der Ansprüche 10 bis 13, **dadurch gekennzeichnet, dass** die an die Nutzschicht (17) angrenzende Zone der Funktionsschicht (8) eine Shorehärte von Shore 50 A bis maximal Shore 90 A aufweist.

15. Verwendung einer mehrschichtigen Folie nach einem der Ansprüche 10 bis 14, **dadurch gekennzeichnet, dass** die Nutzschicht (17) und die Funktionsschicht (8) aus thermoplastischen Elastomeren, vorzugsweise aus thermoplastischen Elastomeren auf Urethanbasis (TPE-U), bestehen.

16. Verwendung einer mehrschichtigen Folie nach einem der Ansprüche 10 bis 15, **dadurch gekennzeichnet, dass** die Nutzschicht (17) und die Funktionsschicht (8) zusammen eine Gesamtdicke zwischen 50 $\mu$m und 2000 $\mu$m aufweisen, wobei die Dicke der Funktionsschicht (8) um den Faktor 2 bis 100 größer ist als die Dicke der Nutzschicht (17).

17. Verwendung einer mehrschichtigen Folie nach einem der Ansprüche 10 bis 16, **dadurch gekennzeichnet, dass** die Funktionsschicht (8) eine Schichtenanordnung (18) aus einer Mehrzahl von koextrudierten Schichten (19, 20), die jeweils aus einem physikalisch oder chemisch vernetzten Polymer bestehen, aufweist, wobei harte Schichten (19), die eine entsprechende oder vergleichbare Shorehärte wie die Nutzschicht (17) aufweisen, und weichere Schichten (20) alternierend angeordnet sind.

18. Verwendung einer mehrschichtigen Folie nach einem der Ansprüche 10 bis 17, **dadurch gekennzeichnet, dass** die Nutzschicht (17) eine durch Prägen erzeugte dreidimensionale Oberflächenstruktur aufweist.

19. Verwendung einer mehrschichtigen Folie nach einem der Ansprüche 10 bis 18, **dadurch gekennzeichnet, dass** die Nutzschicht (17) Additive beispielsweise zur Verbesserung der Flammhemmung, der Verbesserung des elektrostatischen Verhaltens enthält.

20. Verwendung einer mehrschichtigen Folie nach einem der Ansprüche 10 bis 19, **dadurch gekennzeichnet, dass** die Folie transparent ist.

21. Platte (3), wie Bodenbelags-, Wand- oder Deckenverkleidungsplatte und/oder Möbelbauteil, Gebäude-, Abdeck- oder Trockenausbauplatte und/oder als Fassaden-, Paneel- oder Dielenelement, Sichtblende o. dgl., mit einem Plattengrundkörper (2) und einer mit dem Plattengrundkörper (2) verbundenen Deckschicht (1) nach einem der vorhergehenden Ansprüche.

## Claims

1. A top layer (1) for a panel (3) exhibiting a panel main body (2), such as a floor-covering panel, wall-cladding panel or ceiling-cladding panel and/or a furniture component, building panel, cover panel or drywall panel and/or as a façade element, panel element or plank element, or screen, wherein the top layer (1) comprises a paper layer (4) and a film layer (6) made of a flexible plastic forming the outer side (5) of the top layer (1),
**characterised in that**
the paper layer (4) is formed as a pre-impregnate being already partially impregnated during the paper manufacturing process or as a paper being partially impregnated after the paper manufacturing process and before its combination with the film layer (6).

2. The top layer according to claim 1, **characterised in that** the peel strength of the top layer (1) relative to the panel main body (2) is greater than 1.5 N/m, preferably greater than 2 N/cm, in particular between 2.1 to 3.5 N/cm.

3. The top layer according to claim 1 or 2, **characterised in that** the top layer (1) comprises a cross-cut rating (Gt) according to ISO 2409 of 3 or better, in particular of 1 or 0.

4. The top layer according to one of the preceding claims, **characterised in that** the top layer (1) has a splitting strength measured according to the Scott Bond method of greater than 1500 J/mm$^2$, preferably greater than 1800 J/mm$^2$, and in particular between 1900 and 2200 J/mm$^2$.

5. The top layer according to one of the preceding claims, **characterised in that** the top layer (1) has a surface soundness according to EN 13329 of greater than 0.7 N/mm$^2$, preferably between 0.95 and 1.35 N/mm$^2$, and in particular between 1.1 and 1.3 N/mm$^2$.

6. The top layer according to one of the preceding claims, **characterised in that** the paper layer (4) as raw paper has an edge swelling after 60 minutes of 10 to 35 %, preferably between 15 and 30 %, and in particular between 20 and 25 %.

7. The top layer according to one of the preceding claims, **characterised in that** the paper layer (4) as raw paper has a water absorption after 15 minutes of 30 to 60 %, preferably between 40 and 50 %, and in particular between 43 and 47 %.

8. The top layer according to one of the preceding claims, **characterised in that** the paper layer (4) has an impregnation degree of between 5 % and 50 %, preferably between 10 % and 40 %, more preferably between 15 % and 35 %, and in particular between 20 % and 30 %.

9. The top layer according to one of the preceding claims, **characterised in that** the impregnation degree of the paper layer (4) increases from the upper side (10) of the paper layer (4) to the lower side (11) of the paper layer (4).

10. Use of a multi-layered film (16), which is used as the preproduct to manufacture a top layer (1) according to one of claims 1 to 9, with

a wear layer (17) on the upper side made of a physically or chemically crosslinked polymer,
at least one functional layer (8) also made of a physically or chemically crosslinked polymer, and
an adhesion-promoting layer (9) on the lower side,

wherein the functional layer (8) is arranged between the wear layer (17) and the adhesion-promoting layer (9) and through its overall thickness or at least in one zone bordering the wear layer (17) has a lower Shore hardness than the wear layer (17), and wherein the adhesion-promoting layer (9) forms an integrally bonded composite with a partially impregnated paper layer (4) through the application of pressure and/or temperature.

11. Use of a multi-layered film according to claim 10, **characterised in that** the adhesion-promoting layer (9) consists of one or more copolymers on a polyamide, acrylate or urethane basis.

12. Use of a multi-layered film according to claim 10 or 11, **characterised in that** the wear layer (17) and the functional layer (8) are co-extruded.

13. Use of a multi-layered film according to one of claims 10 to 12, **characterised in that** the wear layer (17) has a Shore hardness of greater than Shore 90 A to Shore 80 D.

14. Use of a multi-layered film according to one of claims 10 to 13, **characterised in that** the zone of the functional layer (8) bordering the wear layer (17) has a Shore hardness of Shore 50 A to maximum Shore 90 A.

15. Use of a multi-layered film according to one of claims 10 to 14, **characterised in that** the wear layer (17) and the functional layer (8) consist of thermoplastic elastomers, preferably of thermoplastic elastomers on a urethane basis (TPE-U).

16. Use of a multi-layered film according to one of claims 10 to 15, **characterised in that** the wear layer (17) and the functional layer (8) together have a total thickness of between 50 $\mu$m and 2000 $\mu$m, wherein the thickness of the functional layer (8) is greater than the thickness of the wear layer (17) by a factor of 2 to 100.

17. Use of a multi-layered film according to one of claims 10 to 16, **characterised in that** the functional layer (8) has a layer configuration (18) formed of a plurality of co-extruded layers (19, 20) each consisting of a physically or chemically crosslinked polymer, wherein hard layers (19), which have a Shore hardness corresponding or comparable to that of the wear layer (17), and softer layers (20) are arranged in alternation.

18. Use of a multi-layered film according to one of claims 10 to 17, **characterised in that** the wear layer (17) has a three-dimensional surface structure produced by means of embossing.

19. Use of a multi-layered film according to one of claims 10 to 18, **characterised in that** the wear layer (17) contains additives, for example to improve flame retardancy and/or to improve electrostatic behaviour.

20. Use of a multi-layered film according to one of claims 10 to 19, **characterised in that** the film is transparent.

21. Panel (3), such as a floor-covering panel, wall-cladding panel or ceiling-cladding panel and/or a furniture component, building panel, cover panel or drywall panel and/or as a façade element, panel element or plank element, screen, or similar with a panel main body (2) and a top layer (1) connected with the panel main body (2) according to one of the preceding claims.

**Revendications**

1.  Couche de couverture (1) pour un panneau (3) présentant un corps de base de panneau (2), tel qu'un panneau de revêtement de sol, de revêtement mural ou de revêtement de plafond, et/ou un composant de meuble, un panneau de bâtiment, un panneau de recouvrement ou un panneau de construction sèche, et/ou servant d'élément de façade, de panneau ou de plancher, un pare-vue, la couche de couverture (1) présentant une couche de papier (4) et une couche de film (6), formant la face extérieure (5) de la couche de couverture (1), constituée d'une matière plastique élastique,
    **caractérisée en ce que**
    la couche de papier (4) est conçue comme un préimprégné déjà partiellement imprégné lors de la fabrication du papier, ou comme un papier partiellement imprégné après la fabrication du papier et avant la liaison à la couche de film (6).

2.  Couche de couverture selon la revendication 1, **caractérisée en ce que** la résistance à la séparation de la couche de couverture (1) vis-à-vis du corps de base de panneau (2), est supérieure à 1,5 N/m, de préférence supérieure à 2 N/cm, en particulier se situe dans l'intervalle allant de 2,1 à 3,5 N/cm.

3.  Couche de couverture selon la revendication 1 ou 2, **caractérisée en ce que** la couche de couverture (1) présente une valeur à l'essai de quadrillage (Gt) selon ISO 2409 de 3 ou mieux, en particulier de 1 ou 0.

4.  Couche de couverture selon l'une des revendications précédentes, **caractérisée en ce que** la couche de couverture (1) présente une force de cohésion interne, mesurée par la méthode Scott Bond, supérieure à 1500 J/mm$^2$, de préférence supérieure à 1800 J/mm$^2$ et en particulier située dans l'intervalle allant de 1900 à 2200 J/mm$^2$.

5.  Couche de couverture selon l'une des revendications précédentes, **caractérisée en ce que** la couche de couverture (1) présente une résistance au décollement selon EN 13329 supérieure à 0,7 N/mm$^2$, de préférence située dans l'intervalle allant de 0,95 à 1,35 N/mm$^2$ et en particulier de 1,1 à 1,3 N/mm$^2$.

6.  Couche de couverture selon l'une des revendications précédentes, **caractérisée en ce que** la couche de papier (4) présente en tant que papier brut un gonflement des bords après 60 min de 10 à 35 %, de préférence situé dans l'intervalle allant de 15 à 30 % et en particulier de 20 à 25 %.

7.  Couche de couverture selon l'une des revendications précédentes, **caractérisée en ce que** la couche de papier (4) présente en tant que papier brut une absorption d'eau après 15 min située dans l'intervalle allant de 30 à 60 %, de préférence de 40 à 50 % et en particulier de 43 à 47 %.

8.  Couche de couverture selon l'une des revendications précédentes, **caractérisée en ce que** la couche de papier (4) présente un degré d'imprégnation situé dans l'intervalle allant de 5 % à 50 %, de préférence de 10 % à 40 %, idéalement de 15 % à 35 % et en particulier de 20 % à 30 %.

9.  Couche de couverture selon l'une des revendications précédentes, **caractérisée en ce que** le degré d'imprégnation de la couche de papier (4) augmente de la face supérieure (10) de la couche de papier (4) vers la face inférieure (11) de la couche de papier (4).

10. Utilisation d'une feuille multicouche (16), qui est utilisée en tant que précurseur pour la fabrication d'une couche de couverture (1) selon l'une des revendications 1 à 9, comportant

    une couche d'usure (17) côté face supérieure, en un polymère physiquement ou chimiquement réticulé,
    au moins une couche fonctionnelle (8), elle aussi constituée d'un polymère physiquement ou chimiquement réticulé, et
    une couche (9) promotrice d'adhérence, côté face inférieure,

    la couche fonctionnelle (8) étant disposée entre la couche d'usure (17) et la couche promotrice d'adhérence (9), et présentant sur toute son épaisseur, ou au moins dans une zone en bordure de à la couche d'usure (17), une dureté Shore inférieure à celle de la couche d'usure (17), et la couche promotrice d'adhérence (9) formant par utilisation de pression et/ou de température un assemblage, lié avec correspondance de matière, avec une couche de papier partiellement imprégnée (4).

**11.** Utilisation d'une feuille multicouche selon la revendication 10, **caractérisée en ce que** la couche promotrice d'adhérence (9) est constituée d'un ou plusieurs copolymères à base de polyamide, d'acrylate ou d'uréthanne.

**12.** Utilisation d'une feuille multicouche selon la revendication 10 ou 11, **caractérisée en ce que** la couche d'usure (17) et la couche fonctionnelle (8) sont coextrudées.

**13.** Utilisation d'une feuille multicouche selon l'une des revendications 10 à 12, **caractérisée en ce que** la couche d'usure (17) présente une dureté Shore supérieure à Shore 90 A et allant jusqu'à Shore 80 D.

**14.** Utilisation d'une feuille multicouche selon l'une des revendications 10 à 13, **caractérisée en ce que** la zone en bordure de la couche d'usure (17) de la couche fonctionnelle (8) présente une dureté Shore de Shore 50 A jusqu'à un maximum de Shore 90 A.

**15.** Utilisation d'une feuille multicouche selon l'une des revendications 10 à 14, **caractérisée en ce que** la couche d'usure (17) et la couche fonctionnelle (8) sont constituées d'élastomères thermoplastiques, de préférence d'élastomères thermoplastiques à base d'uréthanne (TPE-U).

**16.** Utilisation d'une feuille multicouche selon l'une des revendications 10 à 15, **caractérisée en ce que** la couche d'usure (17) et la couche fonctionnelle (8) présentent ensemble une épaisseur totale située dans l'intervalle allant de 50 $\mu$m à 2000 $\mu$m, l'épaisseur de la couche fonctionnelle (8) étant supérieure d'un facteur 2 à 100 à l'épaisseur de la couche d'usure (17).

**17.** Utilisation d'une feuille multicouche selon l'une des revendications 10 à 16, **caractérisée en ce que** la couche fonctionnelle (8) présente une structure de couches (18) constituée d'un grand nombre de couches coextrudées (19, 20), dont chacune est constituée d'un polymère physiquement ou chimiquement réticulé, des couches dures (19), qui présentent une dureté Shore correspondant ou comparable à celle de la couche d'usure (17), et des couches plus souples (20), étant disposées en alternance.

**18.** Utilisation d'une feuille multicouche selon l'une des revendications 10 à 17, **caractérisée en ce que** la couche d'usure (17) présente une structure superficielle tridimensionnelle produite par gaufrage.

**19.** Utilisation d'une feuille multicouche selon l'une des revendications 10 à 18, **caractérisée en ce que** la couche d'usure (17) contient des additifs, par exemple pour améliorer le caractère ignifuge, pour améliorer le comportement électrostatique.

**20.** Utilisation d'une feuille multicouche selon l'une des revendications 10 à 19, **caractérisée en ce que** la feuille est transparente.

**21.** Panneau (3), tel qu'un panneau de revêtement de sol, de revêtement mural ou de revêtement de plafond, ou un composant de meuble, un panneau de bâtiment, de recouvrement ou de construction sèche, et/ou servant d'élément de façade, de panneau ou de plancher, un pare-vue, ou analogues, comportant un corps de base de panneau (2) et une couche de couverture (1), assemblée au corps de base de panneau (2), selon l'une des revendications précédentes.

EP 2 740 596 B1

Fig. 1

Fig. 2

Fig. 3

Fig. 4

16

Fig. 5

Fig. 6

**EP 2 740 596 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2263867 B1
- EP 2650119 A1